(19) **Europäisches Patentamt / European Patent Office / Office européen des brevets**

(11) **EP 3 130 634 B1**

(12) **EUROPEAN PATENT SPECIFICATION**

(45) Date of publication and mention of the grant of the patent:
**11.07.2018 Bulletin 2018/28**

(21) Application number: **15799145.6**

(22) Date of filing: **25.05.2015**

(51) Int Cl.:
$C08L\ 7/00^{(2006.01)}$   $B60C\ 1/00^{(2006.01)}$
$B60C\ 11/00^{(2006.01)}$   $C08J\ 3/20^{(2006.01)}$
$C08K\ 3/04^{(2006.01)}$   $C08K\ 3/36^{(2006.01)}$
$C08L\ 15/00^{(2006.01)}$

(86) International application number:
**PCT/JP2015/064966**

(87) International publication number:
**WO 2015/182563 (03.12.2015 Gazette 2015/48)**

(54) **METHOD FOR MANUFACTURING RUBBER COMPOSITION, RUBBER COMPOSITION OBTAINED BY SAME, AND TIRE**

VERFAHREN ZUR HERSTELLUNG EINER KAUTSCHUKZUSAMMENSETZUNG, KAUTSCHUKZUSAMMENSETZUNG UND REIFEN DAMIT

PROCÉDÉ DE PRÉPARATION D'UNE COMPOSITION DE CAOUTCHOUC, COMPOSITION DE CAOUTCHOUC AINSI OBTENUE, ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2014 JP 2014110626**

(43) Date of publication of application:
**15.02.2017 Bulletin 2017/07**

(73) Proprietor: **Bridgestone Corporation**
**Tokyo 104-8340 (JP)**

(72) Inventor: **KATSUBE, Yoshihiro**
**Tokyo 104-8340 (JP)**

(74) Representative: **Oxley, Robin John George**
**Marks & Clerk LLP**
**90 Long Acre**
**London WC2E 9RA (GB)**

(56) References cited:
**JP-A- 2002 226 631    JP-A- 2011 089 075**
**JP-A- 2013 170 243    JP-A- 2014 051 614**

**Description**

Technical Field

The present invention relates to a method for producing a rubber composition, a rubber composition obtained according to the method, and a tire. More precisely, the present invention especially relates to a rubber composition capable of reducing rolling resistance while improving durability such as abrasion resistance, tear resistance and the like, and to a tire containing the same.

Background Art

Recently, with a social demand for energy saving and natural resources saving, tires having a small rolling resistance have become desired for improving fuel economy of cars. For such a demand, as a means for reducing the rolling resistance of tires, there is known a method of using a rubber composition having a reduced hysteresis loss, that is, a rubber composition having a low heat generation property in which the amount of carbon black to be used is reduced or a low-grade carbon black is used, as a tire member, especially as a tread rubber.
However, mere reduction in the amount of carbon black to be used may worsen the abrasion resistance of the rubber composition.
As opposed to this, PTLs 1 and 2 propose a rubber composition using a modified conjugated dienic polymer with an amino group introduced into the polymerization active terminal as a rubber component and using carbon black as a filler, for reducing rolling resistance thereof. PTLs 3 and 4 disclose a rubber composition capable of satisfying both abrasion resistance and rolling resistance of tires where a terminal modified polymer such as a terminal modified polybutadiene rubber or the like is used for improving the dispersibility of carbon black therein.

Citation List

Patent Literature

PTL 1: JP 8-225604 A
PTL 2: JP 8-231658 A
PTL 3: JP 2005-041975 A
PTL 4: JP 2013-155256 A

Summary of Invention

Technical Problem

In general, for improving abrasion resistance of tires, the particle size and the structure of carbon black to be mixed in a rubber composition to constitute tires are considered to be predominant factors, and it is known that reducing the particle size of carbon black could improve abrasion resistance, but when the particle size of carbon black is extremely small, the carbon black may undergo dispersion failure in rubber so that the heat generation property of the rubber composition is thereby increased. When a tire using such a rubber composition as tread, the abrasion resistance thereof may be excellent but the fuel economy performance thereof is poor. Specifically, regarding the particle size of carbon black, abrasion resistance and low heat generation property are in an antinomic relationship.
From the above-mentioned viewpoint, the above-mentioned rubber composition using a terminal modified polymer as a rubber component reduces the heat generation property (hysteresis loss) of the terminal modified polymer, and therefore the rubber composition of the type is effective in some degree for abrasion resistance and rolling resistance but still has some room for improvement in point of the above-mentioned two antinomic characteristics.
The present invention has been made under the situation as above, and its object is to provide a production method for a rubber composition capable of reducing the heat generation of the rubber composition and capable of more increasing the dynamic storage elastic modulus thereof, and to provide a tire having improved abrasion resistance, anti-tear performance (tear resistance) and cut resistance as well as having reduced rolling resistance by using the rubber composition obtained according to the production method as tread.

Solution to Problem

The present inventors have made assiduous studies for the purpose of solving the above-mentioned problems and, as a result, have found that when a rubber composition containing a specific rubber component and carbon black having a specific property is produced according to a specific kneading method, the above-mentioned problems can be solved. The present invention has been completed on the basis of these findings.

Specifically, the present invention provides:

[1] A method for producing a rubber composition for tire tread, which is prepared by mixing 100 parts by mass of a rubber component containing 60 to 80 parts by mass of a natural rubber and 20 to 40 parts by mass of a modified conjugated dienic polymer having one or more functional groups having another atom than carbon and hydrogen, and 40 to 60 parts by mass of carbon black having a nitrogen adsorption specific surface area ($N_2SA$) of 60 to 95 $m^2/g$ and a hydrogen release rate of 0.37 to 0.60 % by mass based on 100 parts by mass of the rubber component, wherein the temperature of the rubber composition at the time of discharge in the kneading step for mixing carbon black therein is 170 to 250°C.

[The nitrogen adsorption specific surface area ($N_2SA$) is measured according to JIS K 6217-2:2001. For the hydrogen release rate, (1) a carbon black sample is dried in a constant temperature drier at 105°C for 1 hour, and cooled in a desiccator to room temperature (23°C), (2) about 10 mg of the sample is accurately metered in a tin-made tubular sample vessel, and sealed up under pressure, and (3) using a gas chromatography apparatus, this is heated in an argon stream atmosphere at 2,000°C for 15 minutes and the hydrogen gas generation amount during this is measured, and the value is expressed as % by mass.]

[2] A rubber composition for tire tread obtained according to the production method of [1].

[3] A tire having a vulcanized product of the rubber composition of [2] as tread, wherein the dynamic storage elastic modulus (E') of the rubber composition after vulcanization is 6.5 MPa or more.

[The dynamic storage elastic modulus (E') is measured at a measurement temperature of 23°C, at an initial strain of 5%, at a dynamic strain of 2% and at a frequency of 52 Hz, using a dynamic tensile viscoelasticity measuring apparatus.]

Advantageous Effects of Invention

According to the present invention, there can be provided a method for producing a rubber composition capable of reducing the heat generating property of the rubber composition and capable of increasing more the dynamic storage elastic modulus thereof. Further, by using the rubber composition obtained according to the production method as tread, there can be provided a tire having not only reduced rolling resistance but also improved abrasion resistance, anti-tear performance (tear resistance) and cut resistance.

Brief Description of Drawing

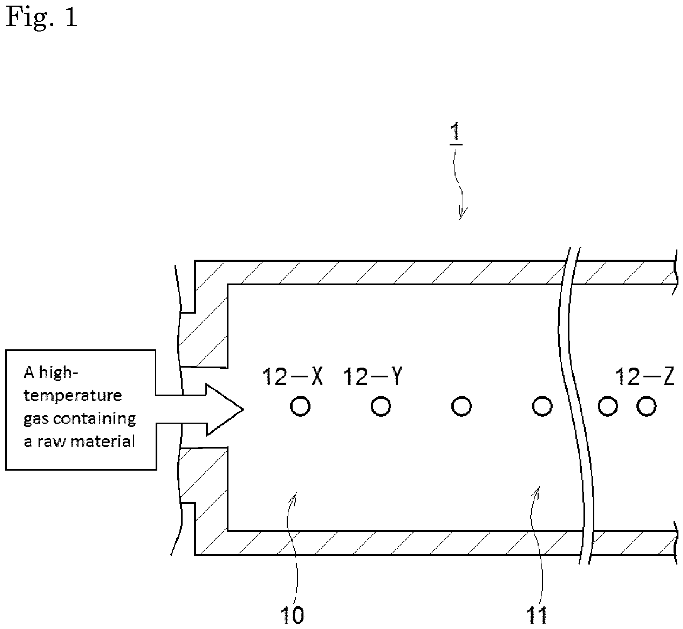

Fig. 1 is an explanatory view of a partial cross section of one example of a carbon black production furnace for producing carbon black for use in the present invention.

Description of Embodiments

The present invention is described in detail hereinunder.

<Production Method for Rubber Composition>

The production method for a rubber composition for tire tread of the present invention is a method for producing a rubber composition for tire tread, which is prepared by mixing 100 parts by mass of a rubber component containing 60 to 80 parts by mass of a natural rubber and 20 to 40 parts by mass of a modified conjugated dienic polymer having one or more functional groups having another atom than carbon and hydrogen, and 40 to 60 parts by mass of carbon black having a nitrogen adsorption specific surface area ($N_2SA$) of 60 to 95 $m^2/g$ and a hydrogen release rate of 0.37 to 0.60 % by mass, wherein the temperature of the rubber composition at the time of discharge in the kneading step for mixing carbon black therein is 170 to 250°C.

The temperature of the rubber composition at the time of discharge in the kneading step for mixing carbon black therein means a temperature of the rubber composition at the time when the rubber composition is discharged out of the kneading device, and is the highest temperature of the rubber composition during the kneading stage.

When the temperature of the rubber composition at the time of discharge in the kneading step for mixing carbon black therein is 170°C or higher, the reaction between the rubber component to be mentioned below and carbon black can be enhanced to reduce the heat generation property of the rubber composition and to increase more the dynamic storage elastic modulus thereof.

On the other hand, the temperature of the rubber composition at the time of discharge in the kneading step for mixing carbon black therein is preferably 250°C or lower. This is because of the probability that the rubber molecular chains may be cut to worsen fracture performance.

While the temperature of the rubber composition at the time of discharge in the kneading step for mixing carbon black therein is 170°C or higher, any component of crosslinking rubber (vulcanizing agent, etc.) is not mixed.

<Rubber Composition>

The rubber composition to be obtained according to the production method of the present invention (hereinunder this may be referred to as "the rubber composition of the present invention) is used for tire tread, and is prepared by mixing 100 parts by mass of a rubber component containing 60 to 80 parts by mass of a natural rubber and 20 to 40 parts by mass of a modified conjugated dienic polymer having one or more functional groups having another atom than carbon and hydrogen, and 40 to 60 parts by mass of carbon black having a nitrogen adsorption specific surface area ($N_2SA$) of 60 to 95 $m^2$/g and a hydrogen release rate of 0.37 to 0.60% by mass.

When the amount of carbon black to be mixed is less than 40 parts by mass, the ability thereof to reinforce the rubber composition could not be sufficiently secured, but on the other hand, when it is more than 60 parts by mass, the dispersibility of carbon black worsens so that the abrasion resistance and the tear resistance of the rubber composition worsen and the heat generation property thereof increases. Specifically, the resistance to heat generation lowers.

<Rubber Component>

When the ratio of the natural rubber is 60 parts by mass or more and that of the modified conjugated dienic polymer is 40 parts by mass or less in 100 parts by mass of the rubber component, the anti-tear performance (tear resistance) and the cut resistance of tire tread improve. When the natural rubber is 80 parts by mass or less and the modified conjugated dienic polymer is 20 parts by mass or more, the rolling resistance reduces and the abrasion resistance improves.

<Natural Rubber>

The natural rubber for use in the rubber component in the present invention is not specifically limited, and the natural rubber latex to be the raw material is not also specifically limited. As the natural rubber latex, field latex, commercial latex and others can be used.

The natural rubber for use in the rubber component in the present invention is preferably a partially deproteinized natural rubber (hereinafter this may be referred to as "PNR") that is prepared by removing protein from a natural rubber latex through partial deproteinization treatment according to a mechanical separation method, and preferably, the total nitrogen content in the PNR is more than 0.1% by mass and 0.4% by mass or less.

More preferably, the mechanical separation method for the partial deproteinization is a centrifugal separation enrichment method from the viewpoint that the total nitrogen content in the natural rubber is easy to control according to the method.

This is because, in deproteinization according to any other method different from the mechanical separation method, for example, according to a degradative treatment method using a protease, a repetitively washing method using a surfactant, a method using both an enzyme and a surfactant or the like, the protein in a solid rubber may reduce but at the same time, an effective ingredient such as tocotrienol or the like having an antiaging effect may also be lost so that the antiaging performance intrinsic to natural rubber may lower.

The total nitrogen content in the natural rubber in the present invention is to be an index of the protein content therein, and the content may be controlled by controlling the centrifugal separation condition (rotation number, time, etc.) for the raw material, natural rubber latex, but preferably, the natural rubber is produced under the controlled condition that the total nitrogen content in the resultant natural rubber product is more than 0.1% by mass and 0.4% by mass or less. The centrifugal separation condition is not specifically limited, and for example, it is desirable that the treatment is carried out a few times repeatedly at a rotation number of 7,500 rpm or so. When the total nitrogen content is 0.1% by mass or less, the heat-aging resistance may lower, but when it is more than 0.4% by mass, a sufficient low heat generation property (a sufficient heat generation-reducing effect) could not be obtained. Specifically, by producing under control of the total nitrogen content in the solid fraction in the centrifugal separation-enriched latex to be more than 0.1% by mass and 0.4% by mass or less followed by solidification and drying, the protein can be reduced and the low heat generation property can be improved. The total nitrogen content is more preferably within a range of 0.25 to 0.38% by mass, even more preferably 0.25 to 0.35% by mass.

Under the operation condition for partial deproteinization treatment, unexpectedly, the effective ingredient as an antiaging agent such as, for example, tocotrienol or the like is not almost lost and therefore the heat resistance can be kept almost on the same level as that of already-existing natural rubber.

The natural rubber latex after the partial deproteinization treatment is solidified, washed and then dried using an ordinary drier such as a vacuum drier, an air drier, a drum drier or the like, thereby giving the natural rubber preferred in the present invention.

<Modified Conjugated Dienic Polymer>

The modified conjugated dienic polymer for use as the rubber component in the present invention must have one or more functional groups having another atom than carbon and hydrogen.

The another atom than carbon and hydrogen is preferably one or more atoms selected from a nitrogen atom, an oxygen atom, a sulfur atom, a semimetal atom and a metal atom. Here, the semimetal is preferably one or more atoms selected from boron, silicon, germanium, arsenic, antimony and tellurium, more preferably one or more atoms selected from boron, silicon and germanium, even more preferably silicon. The metal atom is preferably one or more atoms selected from tin, titanium, zirconium, bismuth and aluminium, more preferably one or more atoms selected from tin and titanium, even more preferably tin.

The functional group having another atom than carbon and hydrogen is a residue of a compound having another atom than carbon and hydrogen. Serving as a modifying agent, the compound having another atom than carbon and hydrogen may react with the active terminal of a conjugated dienic polymer to form the modified conjugated dienic polymer, or a nitrogen-containing compound as the compound having another atom than carbon and hydrogen may react with an alkali metal to form a polymerization initiator for anionic polymerization, thereby forming the modified conjugated dienic polymer having the nitrogen-containing compound residue group at the initiation terminal of the conjugated dienic polymer.

The modifying agent to react with the active terminal of a conjugated dienic polymer includes one or more modifying agents selected from a tin compound, a nitrogen and silicon-containing compound, an oxygen and silicon-containing compound, a sulfur and silicon-containing compound and a nitrogen-containing compound, as mentioned below.

Preferred examples of the tin compound include one or more tin compounds selected from tin tetrachloride and tributyltin chloride. Preferred examples of the nitrogen and silicon-containing compound include silane compounds having a protected primary amino group that are selected from N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane and N,N-bis(trimethylsilyl)aminoethylmethyldiethoxysilane; and preferred examples thereof also include silane compounds having a protected secondary amino group that are selected from N-methyl-N-trimethylsilylaminopropyl(methyl)dimethoxysilane, N-methyl-N-trimethylsilylaminopropyl(methyl)diethoxysilane, N-trimethylsilyl(hexamethyleneimin-2-yl)propyl(methyl)dimethoxysilane, N-trimethylsilyl(hexamethyleneimin-2-yl)propyl(methyl)diethoxysilane, N-trimethylsilyl(pyrrolidin-2-yl)propyl(methyl)dimethoxysilane, N-trimethylsilyl(pyrrolidin-2-yl)propyl(methyl)diethoxysilane, N-trimethylsilyl(piperidin-2-yl)propyl(methyl)dimethoxysilane, N-trimethylsilyl(piperidin-2-yl)propyl(methyl)diethoxysilane, N-trimethylsilyl(imidazol-2-yl)propyl(methyl)dimethoxysilane, N-trimethylsilyl(imidazol-2-yl)propyl(methyl)diethoxysilane, N-trimethylsilyl(4,5-dihydroimidazol-5-yl)propyl(methyl)dimethoxysilane and N-trimethylsilyl(4,5-dihydroimidazol-5-yl)propyl(methyl)diethoxysilane.

Preferred examples of the oxygen and silicon-containing compound include one or more kinds of epoxy group-containing hydrocarbyloxysilane compounds selected from 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane and 2-(3,4-epoxycyclohexyl)ethyl(methyl)dimethoxysilane; and preferred examples of the sulfur and silicon-containing compound include thioepoxy group-containing hydrocarbyloxysilane compounds derived from the above-mentioned epoxy group-containing hydrocarbyloxysilane compounds by substituting the epoxy group therein with a thioepoxy group. Preferred examples of the nitrogen-containing compound include one or more compounds selected from bis(diethylamino)benzophenone, dimethylimidazolidinone, N-methylpyrrolidone and 4-dimethylaminobenzylidene aniline.

The unmodified conjugated dienic polymer to form the modified conjugated dienic polymer in the present invention may be a conjugated dienic homopolymer prepared through polymerization of one kind of a conjugated dienic monomer, or a conjugated dienic copolymer prepared through polymerization of two or more kinds of the monomers.

The conjugated dienic copolymer may be one prepared by polymerizing two or more kinds of a conjugated dienic monomer, or one prepared through copolymerization of one or more kinds of a conjugated dienic monomer and one or more kinds of an aromatic vinyl compound.

Examples of the conjugated dienic monomer include 1,3-butadiene, isoprene, 1,3-pentadiene, 2,3-dimethyl-1,3-butadiene, 2-phenyl-1,3-butadiene, 1,3-hexadiene, etc. Among these, 1,3-butadiene, isoprene and 2,3-dimethyl-1,3-butadiene are especially preferred.

Examples of the aromatic vinyl compound include styrene, $\alpha$-methylstyrene, 1-vinylnaphthalene, 3-vinyltoluene, ethylvinylbenzene, divinylbenzene, 4-cyclohexylstyrene, 2,4,6-trimethylstyrene, etc. Among these, a styrene is especially preferred.

The unmodified conjugated dienic polymer to form the modified conjugated dienic polymer in the present invention is preferably polybutadiene rubber (BR), styrene-butadiene copolymer rubber (SBR), polyisoprene rubber (IR), isoprene-butadiene copolymer rubber (IBR), styrene-isoprene copolymer rubber (SIR), etc., but from the viewpoint of improving the performance of tire tread, polybutadiene rubber and polyisoprene rubber are more preferred, and polybutadiene rubber is especially preferred.

The polymerization method for the conjugated dienic polymer in the present invention may be anionic polymerization or coordination polymerization.

In the case where the conjugated dienic polymer is obtained through anionic polymerization, an alkali metal compound may be used as the polymerization initiator, and a lithium compound is preferred.

The lithium compound for the polymerization initiator is not specifically limited, but a hydrocarbyl lithium and lithium amide compounds are preferably used, and in the case where the former hydrocarbyl lithium is used, a conjugated dienic polymer which has a hydrocarbyl group at the polymerization initiation terminal and in which the other terminal is a polymerization active site is obtained. On the other hand, when the latter lithium amide compound is used, a conjugated dienic polymer which has a nitrogen-containing group at the polymerization initiation terminal and in which the other terminal is a polymerization active site is obtained.

The above-mentioned hydrocarbyl lithium is preferably one having a hydrocarbyl group with 2 to 20 carbon atoms, and examples thereof include ethyl lithium, n-propyl lithium, isopropyl lithium, n-butyl lithium, sec-butyl lithium, tert-octyl lithium, n-decyl lithium, phenyl lithium, 2-naphthyl lithium, 2-butylphenyl lithium, 4-phenylbutyl lithium, cyclohexyl lithium, cyclopentyl lithium, a reaction product of diisopropenylbenzene and butyl lithium, etc. Among these, n-butyl lithium is especially preferred.

Examples of the lithium amide compound include lithium hexamethyleneimide, lithium pyrrolidide, lithium piperidide, lithium heptamethyleneimide, lithium decamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiperazide, lithium ethylpropylamide, lithium ethylbutylamide, lithium ethylbenzylamide, lithium methylphenethylamide, etc. Among these, from the viewpoint of the interaction effect with carbon black and the polymerization initiation performance, cyclic lithium amides such as lithium hexamethyleneimide, lithium pyrrolidide, lithium piperidide, lithium heptamethyleneimide, lithium dodecamethyleneimide and the like are preferred, and lithium hexamethyleneimide and lithium pyrrolidide are more preferred.

The use of lithium hexamethyleneimide as the polymerization initiator is further more preferred since a modified conjugated dienic polymer that has a hexamethyleneimino group being a nitrogen-containing compound residue as the functional group having another atom than carbon and hydrogen at the initiation terminal of the conjugated dienic polymer can be obtained.

In the present invention, the modified conjugated dienic polymer having a nitrogen-containing compound residue at the initiation terminal of a conjugated dienic polymer and having one or more compound residues selected from a tin compound residue, a nitrogen and silicon-containing compound residue, an oxygen and silicon-containing compound residue, a sulfur and silicon-containing compound and a nitrogen-containing compound residue at the active terminal of the conjugated dienic polymer is more preferred from the viewpoint of reducing more the rolling resistance and improving more the abrasion resistance, the anti-tear performance (tear resistance) and the cut resistance.

The method for producing the conjugated dienic polymer through anionic polymerization using the above-mentioned lithium compound as the polymerization initiator is not specifically limited, and any already-existing known method is usable.

Specifically, in an organic solvent inactive to the reaction, for example, in a hydrocarbon solvent such as an aliphatic, alicyclic or aromatic compound or the like, a conjugated dienic compound, or a conjugated dienic compound and an aromatic vinyl compound may be subjected to anionic polymerization using the above-mentioned lithium compound as a polymerization initiator and in the presence of an optional randomizer to give the intended conjugated dienic polymer.

The hydrocarbon solvent is preferably one having 3 to 8 carbon atoms, and examples thereof include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, ethylbenzene, etc. One alone or two or more of these may be used either singly or as combined.

The optional randomizer is a compound that controls the microscopic structure of the conjugated dienic polymer, for example, for increasing the 1,2-bond of the butadiene moiety in a butadiene-styrene copolymer or increasing the 3,4-bond in an isoprene polymer, or controls the compositional distribution of the monomer units in a conjugated dienic compound-aromatic vinyl compound copolymer, for example, for randomizing the butadiene units or the styrene units in a butadiene-styrene copolymer. The randomizer is not specifically limited, and may be suitably selected from any known compounds heretofore generally used as randomizers. Specifically, there are mentioned ethers and tertiary amines such as dimethoxybenzene, tetrahydrofuran, dimethoxyethane, diethylene glycol dibutyl ether, diethylene glycol dimethyl ether, 2,2-bis(2-tetrahydrofuryl)-propane, triethylamine, pyridine, N-methylmorpholine, N,N,N',N'-tetramethylethylenediamine, 1,2-dipiperidinoethane, etc. In addition, potassium salts such as potassium tert-amylate, potassium tert-butoxide, etc., and sodium salts such as sodium tert-amylate and the like are also usable.

One alone or two or more these randomizers may be used either singly or as combined. The amount thereof to be used is preferably selected from a range of 0.01 to 1,000 molar equivalents per mol of the lithium compound.

The temperature of the polymerization reaction is selected from a range of preferably 0 to 150°C, more preferably 20 to 130°C. The polymerization reaction may be carried out under the generated pressure but, in general, it is desirable that the reaction is operated under a sufficient pressure for keeping the monomer substantially in a liquid phase. Specifically, depending on the individual substances to be polymerized or on the polymerization medium or the polymerization temperature, a high pressure may be optionally employed, and such a pressure may be attained according to a suitable method of pressuring the reactor with a gas inactive to the polymerization reaction.

On the other hand, in the case where the modified conjugated dienic polymer is produced through coordination polymerization using a rare earth metal compound as the polymerization initiator, use of the following component (A), component (B) and component (C) in combination is more preferred.

The component (A) for use in the coordination polymerization is selected from a rare earth metal compound, and a complex compound of a rare earth metal compound and a Lewis base, etc. Here, the rare earth metal compound include carboxylates, alkoxides, β-diketone complexes, phosphates, phosphites, etc. of a rare earth element. The Lewis base includes acetylacetone, tetrahydrofuran, pyridine, N,N-dimethylformamide, thiophene, diphenyl ether, triethylamine, organic phosphorus compounds, mono or dialcohols, etc. The rare earth element of the rare earth metal compound is preferably lanthanum, neodymium, praseodymium, samarium or gadolinium. Among these, neodymium is especially preferred. Specifically, as the component (A), neodymium tri-2-ethylhexanoate, a complex compound thereof with acetylacetone, neodymium trineodecanoate, a complex compound thereof with acetylacetone, and neodymium tri-n-butoxide, etc. are exemplified. One alone or two or more these components (A) may be used either singly or as combined.

The component (B) for use in the coordination polymerization is selected from an organic aluminium compound. Specifically, as the organic aluminium compound, a trihydrocarbyl aluminium compound represented by a formula: $R^{12}_3Al$, a hydrocarbyl aluminium hydride represented by a formula: $R^{12}_2AlH$ or $R^{12}AlH_2$ (wherein $R^{12}$ each independently represent a hydrocarbon group having 1 to 30 carbon atoms), a hydrocarbylaluminoxane compound having a hydrocarbon group with 1 to 30 carbon atoms, etc. are exemplified. Specifically, as the organic aluminium compound, a trialkylaluminium, a dialkylaluminium hydride, an alkylaluminium dihydrides, an alkylaluminoxanes, etc. are exemplified. One alone or two or more these compounds may be used either singly or as combined. As the component (B), preferably, an aluminoxanes and any other organic aluminium compound are used in combination.

The component (C) for use in the coordination polymerization is selected from a hydrolyzable halogen-having compound or a complex compound thereof with a Lewis base; an organic halide including a tertiary alkyl halide, a benzyl halide or an allyl halide; an ionic compound composed of a non-coordinating anion and a counter cation, etc. Specifically, as the component (C), an alkylaluminium dichloride, a dialkylaluminium chloride, a complex with a Lewis base such as silicon tetrachloride, tin tetrachloride, zinc chloride and an alcohol, etc.; a complex with a Lewis base such as magnesium chloride and an alcohol, etc.; benzyl chloride, t-butyl chloride, benzyl bromide, t-butyl bromide, triphenylcarbonium tetrakis(pentafluorophenyl)borate, etc. are exemplified. One alone or two or more these components (C) may be used either singly or as combined.

The above-mentioned polymerization initiator may be previously prepared optionally using the same conjugated diene compound as that of the monomer for polymerization and/or a non-conjugated diene compound, in addition to the above-mentioned components (A), (B) and (C). If desired, a part or all of the component (A) or the component (C) may be held on an inactive solid. The amount of each component may be suitably defined, but in general, the amount of the component (A) is 0.001 to 0.5 mmol per 100 g of the monomer. In a molar ration, preferably, component (B)/component (A) is 5 to 1,000, and component (C)/component (A) is 0.5 to 10.

The polymerization temperature in the above-mentioned coordination polymerization is preferably within a range of -80 to 150°C, more preferably within a range of -20 to 120°C. As the solvent for use in the coordination polymerization, the hydrocarbon solvent inactive to the reaction, as exemplified for the above-mentioned anionic polymerization, may be used, and the concentration of the monomer in the reaction solution is the same as that in the anionic polymerization. Further, the reaction pressure in the coordination polymerization may also be the same as in the anionic polymerization, and the raw materials for use in the reaction are preferably those from which reaction-inhibiting substances such as water, oxygen, carbon dioxide, protonic compounds and the like have been substantially removed.

The modified conjugated dienic polymer is preferably one prepared through anionic polymerization using an organic alkali metal compound, especially an alkyl lithium.

After the polymerization reaction in any case of anionic polymerization or coordination polymerization, the conjugated dienic polymer in the present invention may be subjected to modification reaction at the polymerization active terminal thereof with the above-mentioned modifier to give the modified conjugated dienic polymer.

The modification reaction temperature is preferably 20°C or higher, but the polymerization temperature for the conjugated dienic polymer may be used directly as it is, and a range of 30 to 120°C is more preferred. When the reaction temperature is lowered, the viscosity of the polymer tends to increase too much or the dispersibility of the reaction products tends to worsen. On the other hand, when the reaction temperature is raised, the polymerization active site tends to deactivate.

The amount of the modifier to be used is preferably within a range of 0.25 to 3.0 mol, more preferably within a range of 0.5 to 1.5 mol, based on 1 mol of the polymerization initiator used in production of the conjugated dienic polymer.

Examples of the other rubber component optionally mixed, in addition to the above-mentioned natural rubber and modified conjugated dienic polymer, into the rubber composition of the present invention include unmodified styrene-butadiene copolymer (SBR), unmodified polybutadiene rubber (BR), polyisoprene rubber (IR), butyl rubber (IIR), ethylene-propylene-diene terpolymer, etc. These other rubber components than the natural rubber and the modified conjugated dienic rubber may be used singly or as a blend of two or more of them.

<Carbon Black>

Carbon black to be used in the rubber composition of the present invention must have a nitrogen adsorption specific surface area ($N_2SA$) of 60 to 95 $m^2/g$ and a hydrogen release rate of 0.37 to 0.60% by mass. In the case of carbon black having a nitrogen adsorption specific surface area of less than 40 $m^2/g$, a minimum tensile strength necessary for a rubber composition for tread can not exhibited, and in the case of carbon black having a nitrogen adsorption specific surface area of more than 95 $m^2/g$, sufficient dispersibility in a rubber composition can not be secured so that the abrasion resistance and others of the rubber composition may worsen. In the case of carbon black having a hydrogen release rate of less than 0.37% by mass, the polymer-reinforcing performance thereof can not be sufficiently secured, so that the abrasion resistance and the cut resistance of the rubber composition lower and the heat generation property thereof increases.

The nitrogen adsorption specific surface area ($N_2SA$) of carbon black in the present invention is 60 to 95 $m^2/g$. The hydrogen release rate thereof is preferably 0.40% by mass or more. The hydrogen release rate is not specifically limited in point of the upper limit thereof, but from the viewpoint of easiness in production in point of restrictions of equipment, the upper limit of the hydrogen release rate is generally 0.60% by mass or so.

The nitrogen adsorption specific surface area ($N_2SA$) may be measured based on JIS K 6217-2:2001. For the hydrogen release rate, (1) a carbon black sample is dried in a constant temperature drier at 105°C for 1 hour, and cooled in a desiccator to room temperature (23°C), (2) about 10 mg of the sample is accurately metered in a tin-made tubular sample vessel, and sealed up under pressure, and (3) using a gas chromatography apparatus, this is heated in an argon stream atmosphere at 2,000°C for 15 minutes and the hydrogen gas generation amount during this is measured, and the value is expressed as % by mass.

Further, the dibutyl phthalate absorption amount (DBP absorption amount) of carbon black in the present invention is preferably 40 to 180 mL/100 g. Carbon black whose DBP absorption amount falls within the range can sufficiently reinforce the rubber composition and can improve the abrasion resistance of the rubber composition. More preferably, the DBP absorption amount is 70 to 175 mL/100 g.

The DBP absorption amount may be measured according to the method described in JIS K 6217-4:2008, and is expressed as the volume mL of dibutyl phthalate (DBP) absorbed by 100 g of carbon black.

Carbon black to be used in the present invention may be prepared using a reaction system (carbon black production furnace) having, as continuously arranged therein, a combustion gas production zone, a reaction zone and a reaction stopping zone, in which a high-temperature combustion gas is produced in the combustion gas production zone and then a raw material is sprayed and introduced into the reaction zone to thereby form a reaction gas stream containing carbon black, and thereafter in the reaction stopping zone, the reaction gas stream is rapidly cooled by a multistage rapidly-cooling medium introduction means to terminate the reaction, thereby obtaining carbon black. In the carbon black production furnace, by suitably controlling the production air amount (kg/hr), the air temperature (°C), the fuel introduction amount (kg/hr), the raw material introduction amount (kg/hr) and the raw material preheating temperature (°C), carbon black having a desired nitrogen adsorption specific surface area ($N_2SA$) and a desired hydrogen release rate can be obtained.

Fig. 1 is an explanatory view of a partial cross section of one example of a carbon black production furnace for producing carbon black for use in the present invention, which shows a reaction chamber 10 into which a high-temperature gas containing a raw material (raw material hydrocarbon) for carbon black is introduced, and a reaction-continuing and cooling chamber 11. As shown in Fig. 1, the carbon black production furnace 1 is equipped with the reaction-continuing and cooling chamber 11 having a multistage rapidly-cooling medium introduction means 12, as a reaction stopping zone. In the multistage rapidly-cooling medium introduction means 12, a rapidly-cooling medium such as water or the like is sprayed onto the high-temperature combustion gas stream running from the reaction zone. In the reaction stopping zone, the high-temperature combustion gas stream is rapidly cooled by the rapidly-cooling medium to terminate the reaction.

The carbon black production furnace 1 may be further equipped with a device for introducing a gaseous matter in the reaction zone or the reaction stopping zone. Here, as the "gaseous matter", air, a mixture of oxygen and hydrocarbon, a combustion gas originating in combustion reaction of these and the like can be used.

<Silica>

In the present invention, it is desirable that silica is further mixed in addition to carbon black, in an amount of 20 parts by mass or less and the total amount of carbon black and silica is 60 parts by mass or less, based on 100 parts by mass of the rubber component. By mixing silica therein, the heat generation property of the rubber composition may be reduced, the rolling resistance of tires may be further reduced, and the tear resistance may also be improved. The silica amount of 20 parts by mass or less is preferred from the viewpoint of bettering abrasion resistance.

In the present invention, silica which may be mixed if desirable, is not specifically limited, and examples thereof include wet method silica (hydrous silicic acid), dry method silica (silicic anhydride), colloidal silica, etc.

Of the above-mentioned silica, the BET surface area (measured according to ISO 5794/1) is preferably within a range of 40 to 350 $m^2$/g. When the BET surface area of silica is less than 40 $m^2$/g, the particle size of the silica is too large and therefore the abrasion resistance may greatly lower, but when the BET surface area of silica is more than 350 $m^2$/g, the particle size of the silica is too small and therefore the hysteresis loss may greatly increase.

<Silane Coupling Agent>

In the case where silica is mixed in the rubber composition of the present invention, it is desirable that a silane coupling agent is further used therein for the purpose of reinforcing the bonding between the silica component and the rubber component to further enhance the reinforcing performance, and then improving the dispersibility of silica.

Regarding the content of the silane coupling agent in the rubber composition of the present invention, the ratio by mass of (silane coupling agent/silica) is preferably (10/100) or less, more preferably (5/100) to (10/100). When the ratio by mass of (silane coupling agent/silica) is more than (10/100), the effect of improving the reinforcing performance and the dispersibility would be saturated and the cost for mixing may increase. The silane coupling agent is not specifically limited, and preferred examples thereof include bis(3-triethoxysilylpropyl) disulfide, bis(3-triethoxysilylpropyl) trisulfide, bis(3-triethoxysilylpropyl) tetrasulfide, bis(3-trimethoxysilylpropyl) disulfide, bis(3-trimethoxysilylpropyl) trisulfide, bis(3-trimethoxysilylpropyl)tetrasulfide, bis(2-triethoxysilylethyl) disulfide, bis(2-triethoxysilylethyl) trisulfide, bis(2-triethoxysilyl) tetrasulfide, 3-trimethoxysilylpropyl-benzothiazole disulfide, 3-trimethoxysilylpropyl-benzothiazol trisulfide, 3-trimethoxysilylpropyl-benzothiazole tetrasulfide, etc.

(Preparation of Rubber Composition)

In the rubber composition of the present invention, in addition to the rubber component containing the above-mentioned natural rubber and the above-mentioned modified conjugated dienic polymer and the above-mentioned carbon black, any other compounding ingredients that are generally used in the rubber industry, for example, an inorganic filler, a vulcanizer, a vulcanization accelerator, zinc oxide, stearic acid, an antiaging agent, etc., may be mixed as suitably selected within a range not detracting from the object of the present invention. For the compounding ingredients, commercial products may be favorably used. The rubber composition may be prepared by mixing the rubber component, carbon black and optionally-selected various compounding ingredients, then kneading the mixture using a closed kneading device such as a Banbury mixer, an internal mixer, an intensive mixer or the like, or a non-closed kneading device such as a roll or the like, and thereafter warming up and extruding the resultant.

<Tire>

The tire of the present invention is one having the rubber composition of the present invention as the tire tread arranged therein, in which the dynamic storage elastic modulus (E') of the rubber composition after vulcanization is 6.5 MPa or more. In the case of the dynamic storage elastic modulus (E') of 6.5 MPa or more, rolling resistance is reduced and abrasion resistance and cut resistance are improved. From this viewpoint, the dynamic storage elastic modulus (E') is more preferably 6.7 MPa or more, even more preferably 7.0 MPa or more.

Also preferably, tanδ of the rubber composition after vulcanization of the present invention is 0.170 or less. The value of 0.170 or less is favorable for reducing rolling resistance. From this viewpoint, tanδ is more preferably 0.164 or less, even more preferably 0.160 or less.

The abovementioned dynamic storage elastic modulus (E') and tanδ may be measured at a measurement temperature of 23°C, at an initial strain of 5%, at a dynamic strain of 2% and at a frequency of 52 Hz, using a dynamic tensile viscoelasticity measuring apparatus (for example, Spectrometer manufactured by Ueshima Seisakusho Co., Ltd.).

The tire of the present invention using the above-mentioned rubber composition as tread therein realizes reduced rolling resistance and is excellent in abrasion resistance, anti-tear performance (tear resistance) and cut resistance, and is therefore especially favorable as heavy-load tires. Here, heavy-load tires include tires for trucks and buses, off-the-road tires (tires for construction vehicles, tires for vehicles in the mines, etc.), and tires for small-size trucks (light trucks).

The gas to be charged in the tire of the present invention includes ordinary air or air having a varied oxygen partial pressure, or an inert gas such as nitrogen, etc.

The tire of the present invention is not specifically limited except that the above-mentioned rubber composition is used for the tread therein, and may be produced according to an ordinary method. For example, the rubber composition of the present invention is extruded and worked into a tread member, and the tread member is applied and molded in a tire building machine according to an ordinary method to produce a green tire. The green tire is heated under pressure in a vulcanizing machine to give a tire.

Examples

Hereinunder the present invention is described in more detail with reference to Examples, but the present invention is not whatsoever limited to the following Examples.

The heat generation property (tanδ) (23°C) and the dynamic storage elastic modulus E' (23°C) of the rubber composition, and the rolling resistance, the abrasion resistance, the tear resistance and the cut resistance of the tire were evaluated according to the methods mentioned below.

(1) Heat Generation Property (tanδ) (23°C) and Dynamic Storage Elastic Modulus E' (23°C, unit: MPa)

Using a dynamic tensile viscoelasticity measuring apparatus (Spectrometer manufactured by Ueshima Seisakusho Co., Ltd.), the measurement was performed at a measurement temperature of 23°C, at an initial strain of 5%, at a dynamic strain of 2% and at a frequency of 52 Hz. A smaller tanδ means a lower heat generation property and a smaller hysteresis loss.

(2) Rolling Resistance

Measured according to JIS D 4234:2009. The measured rolling resistance value was converted into index expression according to the following formula. The larger value means a larger rolling resistance. Namely, the smaller value indicates excellent fuel efficiency.

$$\text{Rolling Resistance Index} = [(\text{rolling resistance value of tested tire})/(\text{rolling resistance value of tire in Example 8})] \times 100$$

(3) Abrasion Resistance

A tire to be tested was fixed to a vehicle, the vehicle was driven for 40,000 km, and the groove loss after the driving was measured. Taking the reciprocal number of the loss value of the tire in Example 8 as 100, the measured value was converted into index expression. The larger value means excellent abrasion resistance.

$$\text{Abrasion Resistance Index} = [(\text{loss value of tire in Example 8})/(\text{loss value of tested tire})] \times 100$$

(4) Tear Resistance

A tire to be tested was fixed to the drive shaft of a truck, the truck was driven for 100,000 km, and the total length of tear after the driving was measured. Taking the reciprocal number of the total tear length in Example 8 as 100, the measured value was converted into index expression. The larger index value means the smaller number of flaws, thereby exhibiting more excellent tear resistance.

$$\text{Tear Resistance Index} = [(\text{total tear length of tire in Example 8})/(\text{total tear length of tested tire})] \times 100$$

(5) Cut Resistance

Using a pendulum-type cut tester, a concaved steel blade was hammered down from an arbitrary height onto the predetermined tread surface of a tire to be tested that had been charged at a standard air pressure (at the vehicle manufacturer's recommended air pressure), to flaw it, and the depth of the flaw was measured to evaluate the cut resistance of the tire. Taking the reciprocal number of the measured value in Example 8 as 100, the measured value was converted into index expression. The larger index value means excellent cut resistance of the tire.

$$\text{Cut Resistance Index} = [(\text{depth of flaw in tire in Example 8})/(\text{depth of flaw in tested tire})] \times 100$$

Production Example 1

Production Example of Modified Polybutadiene Rubber (HMI-BR)

283 g of cyclohexane, 50 g of 1,3-butadiene, 0.0057 mmol of 2,2-ditetrahydrofurylpropane and 0.513 mmol of hexamethyleneimine were put into a pressure-tight glass container of about 900 mL, which had been dried and purged with nitrogen, and further, 0.57 mmol of n-butyllithium (BuLi) was added thereto and then polymerized for 4.5 hours in a hot water bath at 50°C equipped with a stirrer. The polymerization conversion at this time was almost 100%. Next, as a modifier (coupling agent), 0.100 mmol of tin tetrachloride was rapidly added to the polymerization system, and further stirred at 50°C for 30 minutes for modification reaction. Subsequently, 0.5 mL of an isopropanol solution of 2,6-di-t-butyl-p-cresol (BHT) (BHT concentration: 5% by mass) was added to the polymerization system to stop the reaction, and further, according to an ordinary method, this was dried to give a modified polybutadiene rubber (HMI-BR). The resultant HMI-BR had a vinyl bond amount of 14% in the butadiene moiety therein, had a glass transition temperature (Tg) of -95°C and had a coupling efficiency of 65%.

From the integration ratio of the 1H-NMR spectrum of the resultant HMI-BR, the vinyl bond amount in the butadiene moiety was calculated; from the ratio of the peak area on the high molecular weight side based on the total area of the molecular weight distribution curve in gel permeation chromatography (GPC), the coupling ratio was calculated; and from the inflection point on the DSC curve, the glass transition temperature was determined.

Production Example 2

Production Example of Partially Deproteinized Natural Rubber (PNR)

A natural rubber latex (CT-1) was, after 0.4 mass% ammonia had been added thereto, concentrated through centrifugation at a rotation number of 7,500 rpm for 15 minutes, using a latex separator SLP-3000 (manufactured by Saito Separator Limited). Further, the concentrated latex was centrifuged at a rotation number of 7,500 rpm for 15 minutes. The resultant latex concentrate was diluted to have a solid content of about 20%, and then formic acid was added thereto. This was left as such overnight, and solidified, and the resultant rubber component was dried at 110°C for 210 minutes to give a partially deproteinized natural rubber (PNR). The total nitrogen content of the resultant PNR was measured according to the method mentioned below, and was 0.15% by mass.

Here, for measuring the total nitrogen content, the latex was solidified with acid and dried, and the mass of the resultant solid fraction (sample) was measured accurately, and the nitrogen content therein was determined according to a Kjeldahl method in terms of % by mass in 100% by mass of the solid fraction. The Kjeldahl method is an analytical method for nitrogen, in which the sample is oxidized and decomposed with a hot concentrated sulfuric acid and the formed ammonium ion is quantitatively determined.

Production Example 3

Production of Carbon Blacks A to E

According to the production condition shown in Table 2, carbon blacks A to E were produced.

As the fuel, Bunker A having a specific gravity of 0.8622 (15°C/4°C) was used, and as the raw material oil, a heavy oil having the property shown in Table 1 was used. The nitrogen adsorption specific surface area ($N_2SA$), the hydrogen release rate and the DBP absorption amount of the resultant carbon blacks A to E are shown in Table 2.

The nitrogen adsorption specific surface area ($N_2SA$) was measured according to JIS K 6217-2:2001. For the hydrogen release rate, (1) the carbon black sample was dried in a constant temperature drier at 105°C for 1 hour, and cooled in a desiccator to room temperature (23°C), (2) about 10 mg of the sample was accurately metered in a tin-made tubular sample vessel, and sealed up under pressure, and (3) using a gas chromatography apparatus ("GC-9A" manufactured by Shimadzu Corporation), this was heated in an argon stream atmosphere at 2,000°C for 15 minutes and the hydrogen gas generation amount during this was measured, and the hydrogen gas generation amount was expressed as % by mass.

Table 1

| | | |
|---|---|---|
| Specific Gravity (JIS K2249) (15/4°C) | | 1.1319 |
| Kinematic Viscosity (JIS K2283) ($mm^2$/s at 50°C) | | 26.7 |
| Water Content (JIS K2275) (%) | | 0.5 |
| Residual Carbon (JIS K2210) (%) | | 11.6 |
| Sulfur Content (JIS K2213) (%) | | 0.4 |
| Carbon Content (%) | | 90.1 |
| Hydrogen Content (%) | | 5.4 |
| BMC I[*1] | | 160 |
| Distillation Characteristics (°C) | I.B.P.[*2] | 188 |
| | 10% fraction point | 234 |
| | 30% fraction point | 291 |
| | 50% fraction point | 360 |
| *1 BMC I: Bureau of Mines Correlation Index<br>*2 I.B.P.: Initial Boiling Point | | |

Table 2

| Kind of Carbon Black | | A | B | C | D | E |
|---|---|---|---|---|---|---|
| Production Condition | Production Air Amount (kg/hr) | 1394 | 1412 | 1622 | 1674 | 1552 |
| | Air Temperature (°C) | 700 | 705 | 732 | 699 | 736 |
| | Fuel Introduction Amount (kg/hr) | 675 | 640 | 775 | 755 | 715 |
| | Raw Material Introduction Amount (kg/hr) | 354 | 312 | 422 | 360 | 412 |
| | Raw Material Preheating Temperature (°C) | 186 | 301 | 218 | 298 | 252 |
| Characteristics of Carbon Black | Nitrogen Adsorption Specific Surface Area ($N_2SA$) ($m^2$/g) | 90 | 78 | 92 | 102 | 80 |
| | Hydrogen Release Rate (% by mass) | 0.37 | 0.27 | 0.43 | 0.35 | 0.48 |
| | DBP Absorption Amount (mL/100 g) | 158 | 127 | 135 | 173 | 162 |

Examples 1 to 8 and Comparative Examples 1 to 8

Using the modified polybutadiene rubber (HMI-BR) obtained in Production Example 1, the partially-deproteinized natural rubber (PNR) obtained in Production Example 2 and each of carbon blacks A to E shown in Table 2 and using a Banbury mixer, 16 types of rubber compositions were prepared according to the mixing formulation and at the temperature for discharge of the rubber composition in the kneading stage of mixing carbon black, as shown in Table 3.

In the first stage of kneading, natural rubber, PNR, polybutadiene rubber, HMI-BR, carbon black, silica, silane coupling agent, BMH, stearic acid and antiaging agent 6C were mixed, and in the final stage (second stage) of kneading, the master batch of the rubber composition obtained in the first stage of kneading, zinc oxide, vulcanization accelerator CZ and sulfur were mixed.

Next, 16 types of tires for truck, each having a tire size 11R 22.5, were produced according to an ordinary method and using these 16 types of the rubber compositions as tread therein, and the heat generation property (tan$\delta$) (23°C) and the dynamic storage elastic modulus E' (23°C) of the rubber compositions and the rolling resistance (low heat generation property), the abrasion resistance, the tear resistance and the cut resistance of the tires were evaluated. The results are shown in Table 3.

For measuring the heat generation property (tan$\delta$) (23°C) and the dynamic storage elastic modulus E' (23°C), a test piece for measurement of the heat generation property (tan$\delta$) (23°C) and the dynamic storage elastic modulus E' (23°C) was prepared from the vulcanized rubber sample having a thickness of 2 mm that had been cut out with a slicer at a given position from a depth of 1 mm from the surface layer of the tread of a new tire to a depth of 2 mm thereof.

Table 3

| Unit of Mixing Formulation: part by mass | | Example | | | | | | | | Comparative Example | | | | | | | |
|---|---|---|---|---|---|---|---|---|---|---|---|---|---|---|---|---|---|
| | | 1 | 2 | 3 | 4 | 5 | 6 | 7 | 8 | 1 | 2 | 3 | 4 | 5 | 6 | 7 | 8 |
| Mixing Formulation | Natural Rubber *1 | - | - | - | - | - | - | - | 70 | - | - | - | - | - | - | - | - |
| | PNR *2 | 70 | 70 | 70 | 80 | 60 | 70 | 70 | - | 70 | 70 | 70 | 100 | 50 | 70 | 70 | 70 |
| | Polybutadiene Rubber *3 | - | - | - | - | - | - | - | - | - | - | - | - | - | - | - | 30 |
| | HMI-BR *4 | 30 | 30 | 30 | 20 | 40 | 30 | 30 | 30 | 30 | 30 | 30 | - | 50 | 30 | 30 | - |
| | Carbon Black A *5 | 45 | - | - | - | - | - | - | 45 | 45 | - | - | - | - | - | - | - |
| | Carbon Black B *6 | - | - | - | - | - | - | - | - | - | 45 | - | - | - | - | - | - |
| | Carbon Black C *7 | - | 45 | - | 45 | 45 | 60 | 40 | - | - | - | - | 45 | 45 | 35 | 65 | 45 |
| | Carbon Black D *8 | - | - | - | - | - | - | - | - | - | - | 45 | - | - | - | - | - |
| | Carbon Black E *9 | - | - | 45 | - | - | - | - | - | - | - | - | - | - | - | - | - |
| | Silica *10 | 10 | 10 | 10 | 10 | 10 | - | 15 | 10 | 10 | 10 | 10 | 10 | 10 | 10 | - | 10 |
| | Silane Coupling Agent *11 | 0.8 | 0.8 | 0.8 | 0.8 | 0.8 | - | 1.2 | 0.8 | 0.8 | 0.8 | 0.8 | 0.8 | 0.8 | 0.8 | - | 0.8 |
| | BMH *12 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | Stearic Acid | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Antiaging Agent 6C *13 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Zinc Oxide | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 |
| | Vulcanization Accelerator CZ *14 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Sulfur | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 |

EP 3 130 634 B1

14

(continued)

| Unit of Mixing Formulation: part by mass | Example | | | | | | | | Comparative Example | | | | | | | |
|---|---|---|---|---|---|---|---|---|---|---|---|---|---|---|---|---|
| | 1 | 2 | 3 | 4 | 5 | 6 | 7 | 8 | 1 | 2 | 3 | 4 | 5 | 6 | 7 | 8 |
| Temperature at Discharge of Rubber Composition in Kneading Stage of Mixing Carbon Black (°C) | 170 | 170 | 170 | 170 | 170 | 170 | 170 | 170 | 160 | 170 | 170 | 170 | 170 | 170 | 170 | 170 |
| Heat Generation Property (tan$\delta$) (23°C) | 0.168 | 0.158 | 0.159 | 0.165 | 0.152 | 0.167 | 0.151 | 0.170 | 0.186 | 0.161 | 0.179 | 0.194 | 0.145 | 0.140 | 0.182 | 0.188 |
| Dynamic Storage Elastic Modulus E' (23°C, unit: MPa) | 6.6 | 6.9 | 7.5 | 7.2 | 6.7 | 7.3 | 6.8 | 6.7 | 6.0 | 5.8 | 7.7 | 7.7 | 6.9 | 5.8 | 8.2 | 6.5 |
| Rolling Resistance Index | 98 | 92 | 92 | 97 | 87 | 98 | 87 | 100 | 107 | 96 | 104 | 114 | 83 | 77 | 106 | 111 |
| Abrasion Resistance Index | 100 | 108 | 119 | 103 | 115 | 124 | 103 | 100 | 96 | 86 | 108 | 93 | 121 | 82 | 131 | 96 |
| Tear Resistance Index | 110 | 105 | 100 | 115 | 100 | 100 | 110 | 100 | 105 | 87 | 115 | 135 | 89 | 80 | 103 | 105 |
| Cut Resistance Index | 100 | 105 | 112 | 109 | 103 | 110 | 105 | 100 | 95 | 90 | 115 | 115 | 100 | 90 | 117 | 105 |

[Notes]

*1 Natural Rubber: RSS#1
*2 PNR: Partially-deproteinized natural rubber obtained in Production Example 2
*3 Polybutadiene rubber: Manufactured by Ube Industries, Ltd., trade name "UBEPOL-BR150L" (vinyl bond content: 1%, weight average molecular weight (Mw): 520,000)
*4 HMI-BR: Modified polybutadiene rubber obtained in Production Example 1
*5 to *9 Carbon blacks A to E: Carbon blacks A to E obtained in Production Example 3
*10 Silica: Manufactured by Tosoh Silica Corporation, trade name "Nipsil AQ" (BET surface area 205 $m^2$/g)
*11 Silane coupling agent: Bis(3-triethoxysilylpropyl)tetrasulfide, manufactured by Degussa, trade name "Si69"
*12 BMH: Manufactured by Otsuka Chemical Co., Ltd., naphthoic acid hydrazide
*13 Antiaging agent 6C: N-(1,3-dimethylbutyl)-N'-phenyl-p-phenylenediamine, manufactured by Ouchi Shinko Chemical Industrial Co., Ltd., trade name "Nocrac 6C"
*14 Vulcanization Accelerator CZ: N-cyclohexyl-2-benzothiazylsulfenamide, manufactured by Ouchi Shinko Chemical Industrial Co., Ltd., trade name "Nocceler CZ"

As obvious from Table 3, the tires of Examples 1 to 8 have a low rolling resistance and are excellent in abrasion resistance, tear resistance and cut resistance, as compared with the comparative tires of Comparative Examples 1 to 8.

Industrial Applicability

According to the production method for a rubber composition of the present invention, a rubber composition excellent in low heat generation property and abrasion resistance can be obtained, and can be therefore used as a tread member of various tires for passenger cars, minivans, light trucks and heavy-load vehicles {for trucks, buses, off-the-road tires (for vehicles in the mines, for construction vehicles, for small-size trucks, etc.)}, especially favorably for a tread member for pneumatic tires for heavy-load vehicles {for trucks, buses, off-the-road tires (for vehicles in the mines, for construction vehicles, for small-size trucks, etc.)}.

**Claims**

1. A method for producing a rubber composition for tire tread, which is prepared by mixing 100 parts by mass of a rubber component containing 60 to 80 parts by mass of a natural rubber and 20 to 40 parts by mass of a modified conjugated dienic polymer having one or more functional groups having another atom than carbon and hydrogen, and 40 to 60 parts by mass of carbon black having a nitrogen adsorption specific surface area ($N_2$SA) of 60 to 95 $m^2$/g and a hydrogen release rate of 0.37 to 0.60 % by mass based on 100 parts by mass of the rubber component, wherein the temperature of the rubber composition at the time of discharge in the kneading step for mixing carbon black therein is 170 to 250°C,
   with the proviso that the nitrogen adsorption specific surface area ($N_2$SA) is measured according to JIS K 6217-2:2001, and the hydrogen release rate is obtained as follows: (1) a carbon black sample is dried in a constant temperature drier at 105°C for 1 hour, and cooled in a desiccator to room temperature (23°C), (2) about 10 mg of the sample is accurately metered in a tin-made tubular sample vessel, and sealed up under pressure, and (3) the sample is heated in an argon stream atmosphere at 2,000°C for 15 minutes using a gas chromatography apparatus to measure the hydrogen gas generation amount, and the amount is expressed as % by mass.

2. The method for producing a rubber composition for tire tread according to claim 1, wherein silica is further mixed in an amount of 20 parts by mass or less and the total amount of carbon black and silica mixed is 60 parts by mass or less, based on 100 parts by mass of the rubber component.

3. The method for producing a rubber composition for tire tread according to claim 1 or 2, wherein the natural rubber is obtained from a latex prepared by a partial deproteinization treatment of a natural rubber latex according to a mechanical separation method, and the total nitrogen content in the natural rubber is more than 0.1% by mass and 0.4% by mass or less,
   with the proviso that the total nitrogen content is obtained by accurately measuring the mass of the solid fraction (sample) obtained by solidifying with an acid and drying the latex, measuring the nitrogen content therein according to a Kjeldahl method, and expressing the value as % by mass in 100% by mass of the solid fraction.

4. The method for producing a rubber composition for tire tread according to claim 3, wherein the mechanical separation method for the partial deproteinization treatment is a centrifugal separation enrichment method.

5. A rubber composition for tire tread obtained according to the production method of any one of claims 1 to 4.

6. A tire using the rubber composition of claim 5 as tire tread, wherein the dynamic storage elastic modulus (E') of the rubber composition after vulcanization is 6.5 MPa or more, wherein the dynamic storage elastic modulus (E') is measured at a measurement temperature of 23°C, at an initial strain of 5%, at a dynamic strain of 2% and at a frequency of 52 Hz, using a dynamic tensile viscoelasticity measuring apparatus.

7. The tire according to claim 6, wherein tan$\delta$ of the rubber composition after vulcanization, as measured at a measurement temperature of 23°C, at an initial strain of 5%, at a dynamic strain of 2% and at a frequency of 52 Hz using a dynamic tensile viscoelasticity measuring apparatus, is 0.170 or less.

**Patentansprüche**

1. Verfahren zur Herstellung einer Kautschukzusammensetzung für Reifenlaufflächen, welche durch Mischen von 100 Gewichtsanteilen einer Kautschukkomponente vorbereitet wird, welche 60 bis 80 Gewichtsanteile eines Naturkautschuks und 20 bis 40 Gewichtsanteile eines modifizierten konjugierten Dienpolymers enthält, besitzend eine oder mehrere Funktionsgruppen, welche ein anderes Atom als Kohlenstoff und Wasserstoff besitzen, und 40 bis 60 Gewichtsanteile Ruß, welcher eine stickstoffadsorptionsspezifische Oberfläche ($N_2$SA) von 60 bis 95 m$^2$/g und eine Wasserstofffreisetzungsrate von 0,37 bis 0,60 Gewichtsprozent besitzt, basierend auf 100 Gewichtsanteilen der Kautschukkomponente,
wobei die Temperatur der Kautschukzusammensetzung zum Zeitpunkt des Ablassens im Schritt des Knetens zum Mischen von Ruß darin 170 bis 250°C beträgt,
unter der Voraussetzung, dass die stickstoffadsorptionsspezifische Oberfläche ($N_2$SA) nach JIS K 6217-2:2001 gemessen wird, und die Wasserstofffreisetzungsrate wie folgt erzielt wird: (1) eine Rußprobe wird 1 Stunde lang in einem Trockner bei einer konstanten Temperatur von 105°C getrocknet und in einem Trockner auf Raumtemperatur (23°C) gekühlt, (2) ungefähr 10 mg der Probe werden exakt in ein aus Zinn gefertigtes röhrenförmiges Probengefäß abgemessen und unter Druck fest verschlossen, und (3) die Probe wird 15 Minuten lang in einer Atmosphäre unter Argonfluss bei 2.000°C unter Verwendung eines Chromatografiegerätes erhitzt, um die Menge der Wasserstoffgaserzeugung zu messen, und die Menge wird in Gewichtsprozent ausgedrückt.

2. Verfahren zur Herstellung einer Kautschukzusammensetzung für Reifenlaufflächen nach Anspruch 1, bei welchem Silika zudem in einer Menge von 20 Gewichtsanteilen oder weniger gemischt wird und die Gesamtmenge an gemischtem Ruß und Silika 60 Gewichtsanteile oder weniger beträgt, basierend auf 100 Gewichtsanteilen der Kautschukkomponente.

3. Verfahren zur Herstellung einer Kautschukzusammensetzung für Reifenlaufflächen nach Anspruch 1 oder 2, bei welchem der Naturkautschuk aus einem Latex gewonnen wird, der durch eine teilweise Entproteinisierungsbehandlung eines Naturkautschuklatex nach einem mechanischen Trennverfahren vorbereitet wird, und der Gesamtstickstoffgehalt in dem Naturkautschuk über 0,1 Gewichtsprozent und 0,4 Gewichtsprozent oder weniger beträgt,
unter der Voraussetzung, dass der Gesamtstickstoffgehalt durch exaktes Messen des Gewichts des Feststoffanteils (Probe) erzielt wird, welcher durch Verfestigen mit einer Säure und Trocknen des Latex gewonnen wird, durch Messen des Stickstoffgehaltes hierin nach einem Kjeldahl-Verfahren, und Darstellen des Wertes als Gewichtsprozent von 100 Gewichtsprozenten des Feststoffanteils.

4. Verfahren zur Herstellung einer Kautschukzusammensetzung für Reifenlaufflächen nach Anspruch 3, bei welchem das mechanische Trennverfahren zur teilweisen Entproteinisierungsbehandlung ein Zentrifugaltrennungs- und -anreicherungsverfahren ist.

5. Kautschukzusammensetzung für Reifenlaufflächen, erzielt nach dem Herstellungserfahren nach einem der Ansprüche 1 bis 4.

6. Reifen, verwendend eine Kautschukzusammensetzung nach Anspruch 5 als Reifenlauffläche, bei welchem das dynamische Speicher-Elastizitätsmodul (E') der Kautschukzusammensetzung nach Vulkanisieren 6,5 MPa oder mehr beträgt, wobei das dynamische Speicher-Elastizitätsmodul (E') bei einer Messtemperatur von 23°C, bei einer anfänglichen Belastung von 5 %, bei einer dynamischen Belastung von 2 % und bei einer Frequenz von 52 Hz unter Verwendung eines Apparates zur Messung der dynamischen Zug-Viskoelastizität gemessen wird.

7.  Reifen nach Anspruch 6, bei welchem tanδ der Kautschukzusammensetzung nach Vulkanisieren, gemessen bei einer Messtemperatur von 23°C, bei einer anfänglichen Belastung von 5 %, bei einer dynamischen Belastung von 2 % bei einer Frequenz von 52 Hz unter Verwendung eines Apparates zur Messung der dynamischen Zug-Viskoelastizität, 0,170 oder weniger beträgt.

**Revendications**

1.  Procédé pour produire une composition de caoutchouc pour une bande de roulement de pneumatique, laquelle composition est préparée en mélangeant 100 parties en masse d'un composant de caoutchouc qui contient 60 à 80 parties en masse d'un caoutchouc naturel et 20 à 40 parties en masse d'un polymère diénique conjugué modifié qui comporte un ou plusieurs groupe(s) fonctionnel(s) comportant un autre atome que le carbone et l'hydrogène, et 40 à 60 parties en masse de noir de carbone présentant une aire de surface spécifique d'adsorption d'azote ($N_2SA$) de 60 à 95 m$^2$/g et un taux de libération d'hydrogène de 0,37 % à 0,60 % en masse sur la base de 100 parties en masse du composant de caoutchouc ;
    dans lequel la température de la composition de caoutchouc à l'instant de la décharge au niveau de l'étape de malaxage pour mélanger le noir de carbone dedans est de 170 à 250 °C ;
    étant entendu que l'aire de surface spécifique d'adsorption d'azote ($N_2SA$) est mesurée conformément à JIS K 6217-2:2001, et le taux de libération d'hydrogène est obtenu comme suit : (1) un échantillon de noir de carbone est séché dans un séchoir à température constante à 105 °C pendant 1 heure, et il est refroidi dans un dessiccateur jusqu'à température ambiante (23 °C), (2) environ 10 mg de l'échantillon sont mesurés de façon précise dans une cuve à échantillon tubulaire réalisée en étain, et l'échantillon est scellé sous pression, et (3) l'échantillon est chauffé dans une atmosphère de courant d'argon à 2 000 °C pendant 15 minutes en utilisant un appareil de chromatographie en phase gazeuse afin de mesurer la quantité de génération de gaz hydrogène, et la quantité est exprimée en tant que % en masse.

2.  Procédé pour produire une composition de caoutchouc pour une bande de roulement de pneumatique selon la revendication 1, dans lequel de la silice est en outre mélangée selon une quantité de 20 parties en masse ou moins, et la quantité totale de noir de carbone et de silice mélangée est de 60 parties en masse ou moins, sur la base de 100 parties en masse du composant de caoutchouc.

3.  Procédé pour produire une composition de caoutchouc pour une bande de roulement de pneumatique selon la revendication 1 ou 2, dans lequel le caoutchouc naturel est obtenu à partir d'un latex qui est préparé au moyen d'un traitement de déprotéinisation partielle d'un latex de caoutchouc naturel conformément à un procédé de séparation mécanique, et la teneur totale en azote dans le caoutchouc naturel est supérieure à 0,1 % en masse et inférieure ou égale à 0,4 % en masse ;
    étant entendu que la teneur totale en azote est obtenue en mesurant de façon précise la masse de la fraction solide (l'échantillon) qui est obtenue par solidification à l'aide d'un acide et par séchage du latex, en mesurant la teneur en azote dedans conformément à un procédé de Kjeldahl et en exprimant la valeur en tant que % en masse pour 100 % en masse de la fraction solide.

4.  Procédé pour produire une composition de caoutchouc pour une bande de roulement de pneumatique selon la revendication 3, dans lequel le procédé de séparation mécanique pour le traitement de déprotéinisation partielle est un procédé d'enrichissement par séparation centrifuge.

5.  Composition de caoutchouc pour une bande de roulement de pneumatique obtenue conformément au procédé de production selon l'une quelconque des revendications 1 à 4.

6.  Pneumatique utilisant la composition de caoutchouc selon la revendication 5 en tant que bande de roulement de pneumatique, dans lequel le module élastique de stockage dynamique (E') de la composition de caoutchouc après vulcanisation est de 6,5 MPa ou plus, dans lequel le module élastique de stockage dynamique (E') est mesuré à une température de mesure de 23 °C, sous une contrainte initiale de 5 %, sous une contrainte dynamique de 2 % et à une fréquence de 52 Hz, en utilisant un appareil de mesure de viscoélasticité en traction dynamique.

7.  Pneumatique selon la revendication 6, dans lequel tanδ de la composition de caoutchouc après vulcanisation, tel que mesuré à une température de mesure de 23 °C, sous une contrainte initiale de 5 %, sous une contrainte dynamique de 2 % et à une fréquence de 52 Hz en utilisant un appareil de mesure de viscoélasticité en traction dynamique, est de 0,170 ou moins.

Fig. 1

**REFERENCES CITED IN THE DESCRIPTION**

**Patent documents cited in the description**

- JP 8225604 A
- JP 8231658 A
- JP 2005041975 A
- JP 2013155256 A